# EUROPÄISCHE PATENTSCHRIFT

(11) **EP 1 140 543 B1**
(45) Veröffentlichungstag und Bekanntmachung des Hinweises auf die Patenterteilung: **24.07.2002**
(21) Anmeldenummer: 99959403.9
(22) Anmeldetag: 10.12.1999
(51) Int. Cl.: B60K 17/34, F16H 61/38, F16H 15/38

(54) **GETRIEBE MIT STUFENLOS VARIABLEM ÜBERSETZUNGSVERHÄLTNIS UND VERFAHREN ZUR VERTEILUNG EINES DREHMOMENTES AUF AUSGANGSWELLEN**
TRANSMISSION WITH A CONTINUOUSLY VARIABLE TRANSMISSION RATIO AND METHOD FOR IMPARTING A TORQUE TO OUTPUT SHAFTS
TRANSMISSION A VARIATION CONTINUE DE VITESSE ET REPARTITION DU COUPLE DE ROTATION SUR LES ARBRES DE SORTIE

(30) Priorität: 22.12.1998 DE 19859380
(43) Veröffentlichungstag der Anmeldung: 10.10.2001
(73) Patentinhaber: Volkswagen Aktiengesellschaft, 38436 Wolfsburg (DE); NSK LTD.,, Shinagawa-ku, Tokyo 141-8560 (JP)
(72) Erfinder: ADAMIS, Panagiotis, D-38442 Wolfsburg (DE); PETERSEN, Rainer, D-38444 Wolfsburg (DE); HOFMANN, Lars, D-04600 Altenburg (DE); TENBERGE, Peter, D-09123 Chemnitz (DE); MÖCKEL, Jörg, D-09122 Chemnitz (DE); MACHIDA, Hisashi, Kanagawa 251 (JP); EMAMDJOMEH, Naser, D-70771 Leinfelden-Echterdingen (DE)
(86) Internationale Anmeldenummer: EP9909778
(87) Internationale Veröffentlichungsnummer: WO0037276

(56) Entgegenhaltungen:
- DE-A- 2 720 950
- DE-B- 1 232 429
- GB-A- 2 312 257
- US-A- 4 086 820
- US-A- 4 928 542
- US-A- 5 254 056
- US-A- 5 303 796

## Beschreibung

Die Erfindung betrifft ein Getriebe mit stufenlos variablem Übersetzungsverhältnis nach dem Oberbegriff des Patentanspruches 1.

Das Getriebe ist insbesondere geeignet für Kraftfahrzeuge, die ein hohes Antriebsdrehmoment und mehrere angetriebene Achsen aufweisen, und die für den Einsatz unter schwierigen Traktionsbedingungen vorgesehen sind.

Es ist eine Vielzahl von Getriebebauarten mit veränderbarem Übersetzungsverhältnis bekannt, die sich im wesentlichen durch die Art der Übersetzungsänderung, durch das übertragbare Drehmoment, und durch die Anzahl der Abtriebswellen voneinander unterscheiden.

Im Gegensatz zu Schaltgetrieben erfolgt die Änderung des Übersetzungsverhältnisses in einem Getriebe mit stufenlos variablem Übersetzungsverhältnis kontinuierlich, d.h. ohne Unterbrechung des Kraftflusses im Triebstrang und somit ohne Zugkraftunterbrechung. Dadurch werden Belastungsspitzen im Antriebsstrang vermieden, was besonders vorteilhaft bei der Übertragung hoher Drehmomente ist Zusätzlich wird durch eine ununterbrochene Zugkraftentwicklung die Gefahr eines Traktionsverlustes an den angetriebenen Rädern deutlich reduziert.

Neben anderen Bauformen für Getriebe mit stufenlos variablem Übersetzungsverhältnis sind Toroidgetriebe in unterschiedlichster Ausbildung und Anordnung bekannt, z. B. aus der DE 43 21 588 C2 als stufenloses Reibrollengetriebe, aus der DE 44 46 426 A1 als stufenloses Toroidrollengetriebe und aus der EP 0 679 235 als stufenlos regelbares Getriebe. Diese Getriebe weisen jeweils zwei Teilgetriebe in Toroidbauweise mit einer gemeinsamen Ausgangswelle auf.

Bspw. ist aus der EP 0 743 218 A2 ein stufenloses Toroidgetriebe für vierradgetriebene Kraftfahrzeuge bekannt. Es besteht aus zwei Getriebeeinheiten in Toroidbauweise, die beide eingangsseitig mit einer Eingangswelle verbunden sind und ausgangsseitig jeweils eine separate Abtriebswelle aufweisen. Das an der Eingangswelle anliegende Drehmoment wird durch die Anordnung und Ausbildung der beiden Toroidgetriebe gleichmäßig auf die zugeordneten Abtriebswellen verteilt. Durch die Verbindung der ersten Abtriebswelle mit einem Kegelraddifferentialgetriebe, das ausgangsseitig mit zwei Ausgangswellen, einer ersten und einer zweiten Ausgangswelle, verbunden ist, werden auf jede der beiden Ausgangswellen 50% des Drehmomentes der ersten Abtriebswelle übertragen, d.h. bezogen auf das gesamte Drehmoment jeweils 25%. Durch die unmittelbare Verbindung der zweiten Abtriebswelle mit der zweiten Ausgangswelle werden 100% des Drehmomentes der zweiten Abtriebswelle zusätzlich auf die zweite Ausgangswelle übertragen, d.h. bezogen auf das gesamte Drehmoment 50%. Durch diese Anordnung ergibt sich somit ein fest vorgegebenes Verteilungsverhältnis des gesamten Drehmomentes von 25% an die erste Ausgangswelle und 75% an die zweite Ausgangswelle. Eine ähnliche Verteilung des Drehmomentes wird in einer zweiten Anordnung erreicht, indem anstelle des Kegelraddifferentialgetriebes ein Planetendifferentialgetriebe angeordnet wird, wobei das Verteilungsverhältnis des Drehmomentes auch in diesem Fall fest vorgegeben ist und sich aus dem Übersetzungsverhältnis zwischen dem Sonnenrad und dem Hohlrad des Planetendifferentialgetriebes ergibt. Das fest eingestellte Verteilungsverhältnis des Drehmomentes bedingt, daß die Traktion der angetriebenen Räder nur unter bestimmten Betriebsbedingungen optimal ausgenutzt wird.

Die Traktion einer angetriebenen Achse wird im wesentlichen bestimmt durch den Reibungskoeffizienten zwischen Rad und Fahrbahnoberfläche und der betreffenden Achs- bzw. Radlast. Die Verteilung des Drehmomentes nach einem fest vorgegebenen Verhältnis ist daher nur für bestimmte Betriebs- und Beladungszustände optimal. So ist die fest vorgegebene Verteilung des Drehmoments in einem zweiachsigen vierradgetriebenen Fahrzeug von z. B. 25% an die Vorderachse und 75% an die Hinterachse nur dann vorteilhaft, wenn beispielsweise an beiden Achsen gleiche Reibungsbedingungen herrschen und die aktuellen Achslasten dem angebenen Verteilungsverhältnis für das Drehmoment entsprechen. Folglich ist die hier in der EP 074 32 18 A2 offenbarte fest vorgegebene Verteilung des Drehmomentes noch nicht optimal.

Weiterhin ist im Stand der Technik ein Getriebe mit stufenlos variablem Übersetzungsverhältnis (Toroidbauweise) aus der US-PS 5,303,796 bekannt, von dem die Erfindung ausgeht, bei dem für jedes Teilgetriebe jeweils eine separate Spannvorrichtung vorgesehen ist. Problematisch ist hierbei, daß der Bauraumbedarf aufgrund separat vorgesehener Spannvorrichtungen nicht nur erhöht ist, sondern auch die damit verbundenen Kosten entsprechend hoch ist. Folglich ist auch dieses Getriebe noch nicht ausgebildet.

Der Erfindung liegt daher die Aufgabe zugrunde, ein Getriebe bereitzustellen, bei dem eben keine fest vorgegebene Verteilung des zur Verfügung stehenden Drehmomentes vorgegeben ist, um die damit einhergehenden Probleme zu vermeiden, und wobei der konstruktive Aufwand sowie der Bauraum und die Kosten verringert sind.

Die zuvor aufgezeigte Aufgabe wird durch die Merkmale des Anspruches 1 gelöst.

Das Getriebe weist eine Eingangswelle, mehrere mit der Eingangswelle in Verbindung stehende und in Toroidbauweise ausgebildete Teilgetriebe und mehrere Ausgangswellen auf, wobei jede Ausgangswelle jeweils mit einem der Teilgetriebe verbunden ist. Die Ausgangswellen sind unabhängig voneinander betreibbar ausgebildet und angeordnet. Dem Getriebe ist eine auf die Teilgetriebe wirkende Regeleinrichtung zugeordnet, die derart ausgebildet und angeordnet ist, daß ein an der Eingangswelle anliegendes Drehmoment traktionsabhängig auf die Ausgangswellen verteilbar ist.

Das Getriebe ist für Kraftfahrzeuge mit mehreren angetriebenen Achsen vorgesehen, wobei jeweils jeder angetriebenen Achse eines der Teilgetriebe und die mit diesem in Verbindung stehende Ausgangswelle zugeordnet ist. Demzufolge weist das Getriebe in einem Kraftfahrzeug mit zwei angetriebenen Achsen zwei Teilgetriebe und zwei unabhängig voneinander betreibbare Ausgangswellen auf. Eine Verwendung des Getriebes ist aber beispielsweise auch in einem Kraftfahrzeug mit vier angetriebenen Achsen denkbar, z.B. in einem vierachsigen Geländefahrzeug mit Allradantrieb. In diesem Fall weist das Getriebe vier Teilgetriebe und vier unabhängig voneinander betreibbare Ausgangswellen auf. Durch die auf die Teilgetriebe wirkende Regeleinrichtung wird ein von einem Antriebsmotor erzeugtes und an der Eingangswelle anliegendes Drehmoment traktionsabhängig auf die Ausgangswellen und die mit diesen in Verbindung stehenden angetriebenen Achsen verteilt. Herrschen an allen angetriebenen Achsen bzw. an diesen zugeordneten Rädern gleiche Traktionsbedingungen, so wird das Drehmoment zu gleichen Teilen auf alle angetriebenen Achsen verteilt. Verliert eine der angetriebenen Achsen bzw. deren Räder an Traktion, kann das zuvor übertragene Drehmoment dort nicht mehr vollständig abgenommen werden, d.h. das tatsächlich übertragene Drehmoment wird zwangsläufig kleiner. Dies wird von der Regeleinrichtung registriert und ein jeweils zugeordnetes übertragbares Drehmoment des betreffenden Teilgetriebes wird entsprechend reduziert, unter Umständen bis auf den Wert Null. Den anderen Teilgetrieben und den diesen zugeordneten angetriebenen Achsen steht dadurch entsprechend mehr Drehmoment zur Verfügung. Wenn die erstgenannte angetriebene Achse aufgrund zurückgewonnener Traktion wieder mehr Drehmoment abnehmen kann, wird die Verteilung des Drehmomentes durch die Regeleinrichtung entsprechend rückgängig gemacht und erneut angepaßt Das Verteilungsverhältnis, nach dem das zur Verfügung stehende Drehmoment verteilt wird, ist variabel und wird in der geschilderten Weise automatisch den aktuellen Traktionsverhältnissen angepaßt. Ein oder mehrere nach dem Stand der Technik übliche Differentialgetriebe zur Verteilung eines Drehmomentes auf zwei oder mehrere angetriebene Achsen wird durch die efindungsgemäße Lösung eingespart.

Die jeweils eine Antriebsscheibe und eine Abtriebsscheibe aufweisenden Teilgetriebe sind derart paarweise spiegelsymmetrisch angeordnet sein, daß sich zwischen den Antriebs- und Abtriebsscheiben wirksame axiale Anpreßkräfte gegeneinander aufheben. Die Antriebs- und die Abtriebsscheibe eines Teilgetriebes werden axial gegeneinander gepreßt, damit über zugeordnete Zwischenrollen, die jeweils zwischen einer der Antriebsscheiben und einer der Abtriebsscheiben angeordnet sind, ein Drehmoment durch Reibkontakt übertragbar ist Um diese Kräfte nicht über Axiallager mit hoher Relativbewegung, z.B. gegenüber einem Getriebegehäuse, abstützen zu müssen, was zu großen Reibungsverlusten führen würde, ist es zweckmäßig, jeweils zwei Teilgetriebe derart paarweise anzuordnen, daß sich die zwischen den Antriebs- und Abtriebsscheiben wirksamen axialen Anpreßkräfte gegeneinander aufheben. Dies kann bevorzugt durch spiegelsymmetrische Anordnung der Teilgetriebe erfolgen, wobei sich dann jeweils zwei Antriebsscheiben über eine Verbindung mit der gemeinsamen Eingangswelle kurzschließen können, während sich jeweils zwei Abtriebsscheiben unmittelbar über ein Axiallager gegeneinander abstützen können. Das Axiallager ermöglicht eine relative Drehbewegung der Abtriebsscheiben zueinander, was trotz geringer Drehzahlunterschiede aufgrund der unabhängig voneinander betreibbaren Ausgangswellen erforderlich ist.

Das Getriebe weist für alle der Teilgetriebe eine gemeinsame Spannvorrichtung zur Erzeugung und Veränderung der axialen Anpreßkräfte auf. Insbesondere die Möglichkeit, die axialen Anpreßkräfte zu verändern, hat den Vorteil, daß die Anpreßkräfte den aktuell übertragenen Drehmomenten angepaßt werden können. Alternativ müßten konstante oder drehmomentproportionale Anpreßkräfte erzeugt werden. Konstante Anpreßkräfte müßten so groß bemessen sein, daß das größtmögliche jemals im Betrieb auftretende Drehmoment sicher übertragen werden kann. Dies hätte bei kleineren übertragenen Drehmomenten eine unnötig hohe Belastung aller Bauteile, insbesondere auch unnötig hohe Reibungsverluste und damit einen schlechten Wirkungsgrad, zur Folge. Drehmomentproportionale Anpressungsvorrichtungen berücksichtigen nicht den Einfluß der Übersetzung, der Temperatur, etc. auf den Anpreßbedarf und führen deshalb auch zu einer Überanpressung. Die gemeinsame Spannvorrichtung erfordert eine Einstellung der axialen Anpreßkraft auf den größten von in den Teilgetrieben erforderlichen Werten, ermöglicht aber, daß sich die Anpreßkräfte vollständig innerhalb des Getriebes kurzschließen bzw. aufheben. Eine wirkungsgradverschlechternde Aufnahme der Anpreßkräfte mittels Axiallager durch ein Getriebegehäuse wird dadurch vermieden. Die Spannvorrichtung kann so ausgelegt sein, daß eine von dieser erzeugte axiale Anpreßkraft unmittelbar auf eine einzelne axial verschiebar gelagerte Antriebsscheibe eines Paares von Teilgetrieben wirkt. Diese axiale Anpreßkraft wird dann durch Kontakt der Komponenten Antriebsscheibe, Zwischenrollen und Abtriebsscheibe untereinander in beiden der paarweise angeordneten Teilgetriebe wirksam. Die Spannvorrichtung kann als mechanisches, hydraulisches, pneumatisches, elektromagnetisches oder in anderer Weise funktionierendes System ausgebildet sein.

Besonders vorteilhaft ist es, wenn die Spannvorrichtung als hydraulische Vorrichtung ausgebildet ist. Eine hydraulische Spannvorrichtung weist eine hohe Energiedichte auf, d.h. bei kleinem Bauvolumen sind große Kräfte erzeugbar. Ein weiterer Vorteil, insbesondere im Vergleich zu mechanischen Spannvorrichtungen, besteht in der Möglichkeit, die axialen Anpreßkräfte außer in Abhängigkeit von dem übertragenen Drehmoment auch in Abhängigkeit weiterer Parameter, wie z.B. einem Übersetzungsverhältnis, einer Drehzahl und einer Betriebstemperatur, zu steuern. Aufgrund einer besseren Anpassung an die Betriebsbedingungen ist dann ein höherer Wirkungsgrad und eine höhere Lebensdauer des Getriebes erreichbar.

Die Spannvorrichtung kann mehrere parallel geschaltete Druckzweige aufweisen. Dadurch wird ein in der hydraulischen Spannvorrichtung zur Erzeugung einer bestimmten axialen Anpreßkraft erforderlicher Systemdruck reduziert, so daß die Antriebsleistung einer Hydraulikpumpe und eventuelle Leckverluste sinken. Der Gesamtwirkungsgrad des Getriebes wird dadurch verbessert.

Jedes der Teilgetriebe kann jeweils mindestens eine Kraftstelleinrichtung zur Erzeugung und Veränderung von Stellkräften aufweisen, wobei die Stellkräfte als Stützkräfte zwischen den Getriebegehäuse und den Zwischenrollen zur Abstützung eines übertragenen Drehmomentes und zur Einstellung und Änderung eines Übersetzungsverhältnisses vorgesehen sind. Aufgrund einer Kopplung zwischen dem übertragenen Drehmoment und dem eingestellten Übersetzungsverhältnis ist die Verwendung der Kraftstelleinrichtungen für beide Funktionen möglich und sinnvoll. Die Kraftstelleinrichtungen können als hydraulische, pneumatische oder elektromagnetische Stellglieder oder in anderer Weise ausgebildet sein.

Jedes der Teilgetriebe kann mehrere Zwischenrollen aufweisen. Den Zwischenrollen kann jeweils eine gemeinsame Kraftstelleinrichtung oder jeder der Zwischenrollen eine separate Kraftstelleinrichtung zugeordnet sein. Bei Verwendung einer einzigen Kraftstelleinrichtung für jedes der Teilgetriebe sorgt eine Kraftkopplung der Zwischenrollenlagerungen für eine Synchronisierung von wirksamen Kräften und Bewegungen der Zwischenrollen bezüglich der zugeordneten Kippachsen. Eine solche Kopplung ist bevorzugt hydraulisch ausgebildet, kann jedoch auch in anderer Weise erfolgen. Bei Verwendung von separaten Kraftstelleinrichtungen für jede der Zwischenrollen wird die Synchronisation von Kräften und Bewegungen durch eine einheitliche Ansteuerung der dem jeweiligen Teilgetriebe zugeordneten Kraftstelleinrichtungen bewerkstelligt.

Die Zwischenrollen können bezüglich zugeordneter Rotationsachsen exzentrisch gelagert sein. Dadurch stellen sich die Zwischenrollen selbsttätig zwischen der jeweiligen Antriebs- und Abtriebsscheibe ein, so daß elastische Verformungen und Fertigungstoleranzen von Antriebsscheiben, Abtriebsscheiben und Zwischenrollen ausgeglichen werden. Hierdurch wird automatisch sichergestellt, daß an den Zwischenrollen wirksame tangentiale Reibungskräfte antriebs- und abtriebsseitig jeweils gleich groß sind, so daß ein zu übertragendes Drehmoment gleichmäßig auf alle einem Teilgetriebe zugeordneten Zwischenrollen verteilt und sicher von der jeweiligen Antriebsscheibe auf die zugeordnete Abtriebsscheibe übertragen wird.

Die Teilgetriebe können Zwischenrollenlagerungen aufweisen, die derart ausgebildet und angeordnet sind, daß jeweils das Übersetzungsverhältnis und die Stützkräfte zur Abstützung des übertragenen Drehmomentes durch eine einzige Kraftstelleinrichtung einstellbar und veränderbar sind. Dadurch wird die Kopplung zwischen dem übertragenen Drehmoment und dem eingestellten Übersetzungsverhältnis erreicht.

In einer vorteilhaften Ausführung können die einem Teilgetriebe zugeordneten Zwischenrollen in einem gemeinsamen Gehäuse angeordnet sein. Durch eine solche Anordnung wird eine kompakte Bauweise erreicht und die Unterbringung mehrerer Zwischenrollen in einem Teilgetriebe in Toroidbauweise ermöglicht. Kräfte, die von den axialen Anpreßkräften zwischen den Antriebs- und Abtriebsscheiben herrühren und die Zwischenrollen axial nach außen drücken, werden vom Gehäuse aufgenommen und somit vom Getriebegehäuse ferngehalten.

Jeder der Zwischenrollen kann ein Brückenträger zugeordnet sein, der in dem Gehäuse bezüglich einer Kippachse schwenkbar und axial verschiebbar gelagert ist, wobei jeder der Brückenträger einen Laststeg zur Einleitung einer axialen Stellkraft aufweisen kann. Der Brückenträger nimmt einerseits die zugeordnete Zwischenrolle mit deren vorteilhaft exzentrischen Lagerung auf. Andererseits ermöglicht der Laststeg die neigungsunabhängige Einleitung der axialen Stellkraft, die bei einem Ungleichgewicht mit auf die Zwischenrolle wirksamen drehmomentproportionalen Tangentialkräften zu einer axialen Verschiebung des Brückenträgers und demzufolge zu einer Drehung des Brückenträgers und der zugeordneten Zwischenrolle um die Kippachse führt.

Die Regeleinrichtung kann für jedes Teilgetriebe mindestens eine Rückführung des Übersetzungsverhältnisses aufweisen. Die Information des Übersetzungsverhältnisses kann in Form einer Schwenkposition der zugeordneten Zwischenrolle bezüglich der Kippachse vorliegen. Die Rückführung der Position einer einzigen Zwischenrolle pro Teilgetriebe ist dann ausreichend, wenn durch geeignete Maßnahmen sichergestellt wird, daß sich alle Zwischenrollen eines Teilgetriebes weitgehend synchron bewegen. Eine Synchronisation der Bewegungen der Zwischenrollen kann durch eine mechanische Kopplung der Zwischenrollenlagerungen oder durch eine gemeinsame Ansteuerung der zugeordneten Kraftstelleinrichtungen erfolgen. Da eine mechanische Kopplung extrem genaue Fertigungstoleranzen erfordert, ist die Kraftkopplung zu bevorzugen.

Die Regeleinrichtung kann derart ausgebildet und angeordnet sein, daß durch eine Änderung der Stellkräfte der Kraftstelleinrichtungen das Übersetzungsverhältnis in jedem der Teilgetriebe auf einen einheitlich vorgegebenen Sollwert einstellbar ist, und daß das jeweils übertragbare Drehmoment automatisch an das momentan an der jeweils zugeordneten Ausgangswelle abgenommene Drehmoment anpaßbar ist. Durch das in allen Teilgetrieben einheitlich vorgegebene und eingestellte Übersetzungsverhältnis werden unnötige Verspannungen des Antriebsstrangs und Schlupfverluste vermieden. Die Anpassung des übertragbaren Drehmomentes in jedem der Teilgetriebe sorgt für eine optimale Verteilung des gesamten zur Verfügung stehenden Drehmomentes.

Die Regeleinrichtung kann als Hydrauliksystem ausgebildet sein. Die Regeleinrichtung kann dann mindestens eine Pumpe aufweisen, die unter allen Betriebsbedingungen einen ausreichenden Systemdruck bereitstellt, der von mindestens einem Druckregler konstant gehalten wird. Die Regeleinrichtung kann über einen Sollwertgeber verfügen, der einen für alle Teilgetriebe einheitlichen Sollwert für das Übersetzungsverhältnis vorgibt. Für jedes der Teilgetriebe kann ein separates Steuerventil vorgesehen sein, das mit dem Sollwertgeber in Verbindung steht. Für jedes der Teilgetriebe kann eine unabhängige Rückführung der Zwischenrollenposition bezüglich ihrer Neigung um die Kippachse vorgesehen sein, wobei die Rückführung ebenfalls auf das zugeordnete Steuerventil einwirkt. Die mit den Zwischenrollenlagerungen in Verbindung stehenden Kraftstelleinrichtungen können von dem Steuerventil des zugeordneten Teilgetriebes derart gesteuert werden, daß das Übersetzungsverhältnis in allen Teilgetrieben identisch ist und dem vorgegebenen Sollwert entspricht. Eine solche hydraulische Regeleinrichtung hat den Vorteil, bei kompakten Abmessungen große Stellkräfte bereitstellen zu können.

Die jeweils jedem der Teilgetriebe zugeordneten Kraftstelleinrichtungen können parallel geschaltet sein. Dadurch wird die Synchronisierung der Stützkräfte bzw. der Zwischenrollenposition der zugeordneten Zwischenrollen bewirkt, so daß eine einzige Rückführung und damit ein einziges Steuerventil für jedes der Teilgetriebe ausreichend ist.

Die Kraftstelleinrichtungen können jeweils ein Drehkolbensystem aufweisen, das derart ausgebildet und angeordnet ist, daß eine rotatorische Bewegung in eine translatorische Bewegung wandelbar ist. Dies kann durch eine mit dem Drehkolbensystem in Verbindung stehende Exzenterführung erfolgen, die beispielsweise auf den Laststeg des Brückenträgers einwirken kann. Durch den Eingriff der Exzenterführung in den Laststeg wird eine rotatorisch wirksame Stallkraft des Drehkolbensystems in eine am Brückenträger wirksame axiale d.h. translatorische Stallkraft umgewandelt. Durch die Ausführung als Drehkolbensystem wird eine besonders kompakte Bauweise erreicht, so daß die Unterbringung von möglichst drei Zwischenrollen in jedem Teilgetriebe möglich wird. Wenn drei Zwischenrollen in einem Teilgetriebe in Toroidbauweise verwendet werden, wird eine besonders gleichmäßige Verteilung einer Axiallast ohne extreme Anforderungen an Fertigungsgenauigkeiten erreicht und die Last pro Zwischenrolle verringert. Damit verbundenen sind geringere erforderliche axiale Anpreßkräfte zwischen den Antriebs- und Abtriebsscheiben, wodurch sich der Wirkungsgrad des Getriebes verbessert.

Dem Getriebe kann eingangsseitig ein Schaltgetriebe zur Drehrichtungsumkehr vorgeschaltet sein. Das mit der Eingangswelle des Getriebes in Verbindung stehende Schaltgetriebe ermöglicht beim Einsatz in Kraftfahrzeugen eine Fahrtrichtungsänderung, d.h. eine Umschaltung von Vorwärts- auf Rückwärtsfahrt und umgekehrt.

Dem Getriebe oder einem diesem vorgeschalteten Schaltgetriebe kann eingangsseitig ein Anfahrelement vorgeschaltet sein, das mit der Eingangswelle des Getriebes oder mit dem Schaltgetriebe in Verbindung steht. Das Anfahrelement dient zur Überbrückung von Drehzahldifferenzen zwischen einer Minimaldrehzahl des Antriebsmotors und einem Stillstand des Getriebes beim Anfahrvorgang. Das Anfahrelement kann als Reibkupplung, als hydraulische Kupplung, als Kombination aus beiden Bauformen oder in anderer Weise ausgeführt sein.

Das Getriebe ist so konstruiert, daß in jedem von mehreren Teilgetrieben eine Kopplung zwischen einem übertragenen Drehmoment und einem eingestellten Übersetzungsverhältnis derart erfolgt, daß eine Änderung des übertragenen Drehmomentes eine Veränderung des Übersetzungsverhältnisses bewirkt. Die Veränderung des Übersetzungsverhältnisses wird registriert und dadurch kompensiert, daß auf Zwischenrollenlagerungen einwirkende Stützkräfte dem geänderten übertragenen Drehmoment angepaßt werden.

Es kann vorgesehen sein, daß die Stützkräfte von einer Regeleinrichtung, auf die ein für alle der Teilgetriebe gemeinsamer Sollwert und ein jeweiliger Istwert des Übersetzungsverhältnisses einwirken, gesteuert werden. Bei einem Ungleichgewicht zwischen dem übertragenen Drehmoment und den Stützkräften in einem der Teilgetriebe werden dort vorhandene Zwischenrollen bezogen auf zugeordnete Kippachsen axial verschoben, so daß auf die Zwischenrollen von Antriebs- und Abtriebsscheiben herrührende Querkräfte bezüglich der Kippachsen einwirken und die Zwischenrollen um die Kippachsen drehen, was einer Änderung des Übersetzungsverhältnisses entspricht.

Weitere Merkmale und vorteilhafte Ausgestaltungen des erfindungsgemäßen Getriebes ergeben sich aus der Beschreibung der nachstehend aufgeführten Ausführungsbeispiele.

Es zeigen
- Figur 1: ein Getriebe mit stufenlos variablem Übersetzungsverhältnis,
- Figur 2: eine als Hydrauliksystem ausgeführte Regeleinrichtung und
- Figur 3: eine Zwischenrollenlagerung.

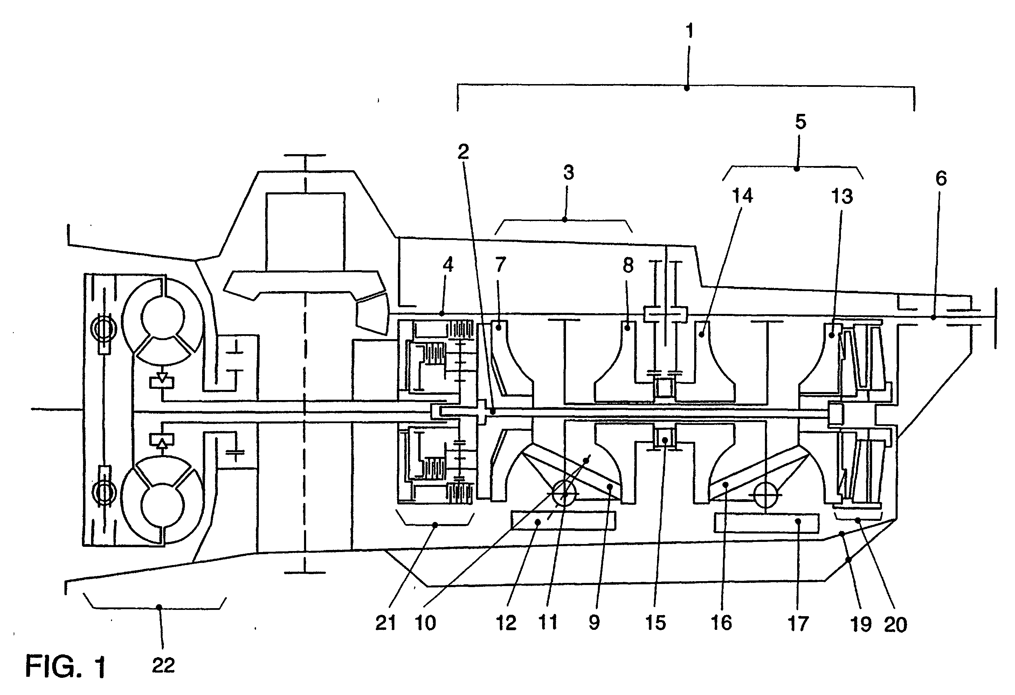

Figur 1 zeigt ein Getriebe 1 mit stufenlos variablem Übersetzungsverhältnis, welches für Kraftfahrzeuge mit zwei angetriebenen Achsen vorgesehen ist. Das Getriebe weist eine Eingangswelle 2 und zwei Teilgetriebe 3, 5 in Toroidbauweise auf. Das erste Teilgetriebe 3 ist mit einer ersten Ausgangswelle 4 verbunden, das zweite Teilgetriebe 5 steht in Verbindung mit einer von der ersten Ausgangswelle 4 unabhängig betreibbaren zweiten Ausgangswelle 6. Dem ersten Teilgetriebe 3 ist eine erste Antriebsscheibe 7 zugeordnet, welche mit der Eingangswelle 2 in Verbindung steht. Gegenüber der ersten Antriebsscheibe 7 ist koaxial frei drehbar eine erste Abtriebsscheibe 8 angeordnet, die mit der ersten Ausgangswelle 4 in Wirkverbindung steht. Zwischen der ersten Antriebsscheibe 7 und der ersten Abtriebsscheibe 8 sind mehrere erste Zwischenrollen 9 angeordnet, von denen hier nur eine einzige dargestellt ist. Die ersten Zwischenrollen 9 sind frei drehbar um zugeordnete Rotationsachsen 10 und schwenkbar um zugeordnete Kippachsen 11 derart gelagert, daß Reibkontakt einerseits zwischen der ersten Antriebsscheibe 7 und den ersten Zwischenrollen 9 und andererseits zwischen den ersten Zwischenrollen 9 und der ersten Abtriebsscheibe 8 besteht. Den ersten Zwischenrollen 9 sind erste Kraftstelleinrichtungen 12 zugeordnet, die jeweils derart ausgebildet und angeordnet sind, daß ein momentan übertragenes Drehmoment abstützbar und ein Übersetzungsverhältnis auf einem vorgegebenen Sollwert haltbar ist. Dem zweiten Teilgetriebe 5 ist eine zweite Antriebsscheibe 13 zugeordnet, welche axial verschiebbar, jedoch drehfest mit der Eingangswelle 2 verbunden ist. Eine zweite Abtriebsscheibe 14, die dem zweiten Teilgetriebe 5 zugeordnet ist, ist frei drehbar gelagert und stützt sich über ein Axiallager 15 gegen die erste Abtriebsscheibe 8 ab. Zwischen der zweiten Antriebsscheibe 13 und der zweiten Abtriebsscheibe 14 sind mehrere zweite Zwischenrollen 16, von denen wieder nur eine einzige dargestellt ist, baugleich zum ersten Teilgetriebe 3 derart gelagert, daß Reibkontakt einerseits zwischen der zweiten Antriebsscheibe 13 und den zweiten Zwischenrollen 16 und andererseits zwischen den zweiten Zwischenrollen 16 und der zweiten Abtriebsscheibe 14 besteht. Analog zum ersten Teilgetriebe 3 sind den zweiten Zwischenrollen 16 zweite Kraftstelleinrichtungen 17 zugeordnet. Die beiden Abtriebsscheiben 8, 14 sind frei drehbar auf einer gehäusefesten Achse 18 gelagert, die mit einem Getriebegehäuse 19 in Verbindung steht. Am der zweiten Antriebsscheibe 13 zugeordneten Ende der Eingangswelle 2 befindet sich eine auf diese zweite Antriebsscheibe 13 wirksame Spannvorrichtung 20. Die beiden Teilgetriebe 3, 5 sind bezüglich einer zwischen den Abtriebsscheiben 8, 14 befindlichen Ebene, die senkrecht zur Eingangswelle 2 liegt, spiegelsymmetrisch angeordnet.

Dem Getriebe 1 ist eingangsseitig ein Schaltgetriebe 21 zur Drehrichtungsumkehr vorgeschaltet, das mit der Eingangswelle 2 in Verbindung steht. Mit dem Schaltgetriebe 21 steht wiederum ein vorgeschaltetes Anfahrelement 22 in Wirkverbindung.

Ein z. B. von einem Antriebsmotor erzeugtes Drehmoment wirkt über das Anfahrelement 22 und das Schaltgetriebe 21 auf die Eingangswelle 2 des Getriebes 1. Das Anfahrelement 22 überbrückt eine Drehzahldifferenz, die sich bei einem Anfahrvorgang aus einer Mindestdrehzahl des Antriebsmotors und stillstehenden angetriebenen Achsen ergibt. Das Schaltgetriebe 21 ermöglicht eine Umschaltung auf Rückwärtsfahrt und umgekehrt.

In Fahrt wird das an der Eingangswelle 2 zur Verfügung stehende Drehmoment zunächst auf die erste Antriebsscheibe 7 des ersten Teilgetriebes 3 und die zweite Antriebsscheibe 13 des zweiten Teilgetriebes 5 übertragen. In beiden Teilgetrieben wird das jeweils an der Antriebsscheibe 7, 13 anliegende Drehmoment in einer Abwälzbewegung der Zwischenrollen 9, 16 durch Reibkontakt auf die jeweils zugeordnete Abtriebsscheibe 8, 14 übertragen. Dabei wird ein geometrisches Übersetzungsverhältnis durch Wälzkreisradien bestimmt, auf denen die Zwischenrollen 9, 16 auf der jeweiligen Antriebsscheibe 7, 13 und auf der jeweiligen Abtriebsscheibe 8, 14 abrollen. Die Wälzkreisradien ergeben sich unmittelbar aus der Neigung der Zwischenrollen 9, 16 bezüglich ihrer Kippachsen 11. Ist der Wälzkreisradius auf der Antriebsscheibe 7, 13 größer als auf der Abtriebsscheibe 8, 14, so dreht sich die Abtriebsscheibe 8, 14 schneller als die Antriebsscheibe 7, 13, d.h. es wirkt ein kleineres Übersetzungsverhältnis, z. B. für Schnellfahrt. Bei umgekehrter Neigung der Zwischenrollen 9, 16 ergibt sich ein größeres Übersetzungsverhältnis, z. B. für Langsamfahrt. Bei gleichen Wälzkreisradien auf Antriebs- 7, 13 und Abtriebsscheiben 8, 14, die sich ergeben, wenn die Zwischenrollen 9, 16 hier im wesentlichen parallel zur Eingangswelle 2 stehen bzw. deren Rotationsachsen 10 senkrecht dazu, ist das geometrische Übersetzungsverhältnis 1:1. Das durch die beiden Teilgetriebe 3, 5 übertragbare Drehmoment wird durch zwei Faktoren bestimmt: Erstens sorgt die Spannvorrichtung 20 für eine veränderbare axiale Anpreßkraft, die durch Verschiebung der zweiten Antriebsscheibe 13 auf der Eingangswelle 2 in Richtung der ersten Antriebsscheibe 7 gleichermaßen auf beide Teilgetriebe 3, 5 derart einwirkt, daß ein ausreichender Anpreßdruck zwischen den Antriebsscheiben 7, 13, den Zwischenrollen 9, 16, und den Abtriebsscheiben 8, 14 zur sicheren Übertragung der Drehmomente durch Reibkontakt zur Verfügung steht. Zweitens sorgen die Kraftstelleinrichtungen 12, 17 für die erforderlichen Stützkräfte der Zwischenrollen 9, 16 in Umfangsrichtung. Durch unterschiedliche Einstellung der auf die ersten Zwischenrollen 9 in dem ersten Teilgetriebe 3 wirkenden Stützkräfte und der auf die zweiten Zwischen rollen 16 in dem zweiten Teilgetriebe 5 wirkenden Stützkräfte wird das an der Eingangswelle 2 anliegende Drehmoment zu ungleichen Teilen näherungsweise im Verhältnis der wirksamen Stützkräfte auf die erste Ausgangswelle 4 und die zweite Ausgangswelle 6 verteilt.

Das Übersetzungsverhältnis, welches in diesem Ausführungsbeispiel ebenfalls über die Kraftstelleinrichtungen 12, 17 durch Schwenken der Zwischenrollen 9, 16 um die zugeordneten Kippachsen 11 erfolgt, wird in beiden Teilgetrieben 3, 5 im wesentlichen gleich groß eingestellt, um unterschiedliche Geschwindigkeiten an den angetriebenen Achsen und damit Schlupf an den Rädern zu vermeiden.

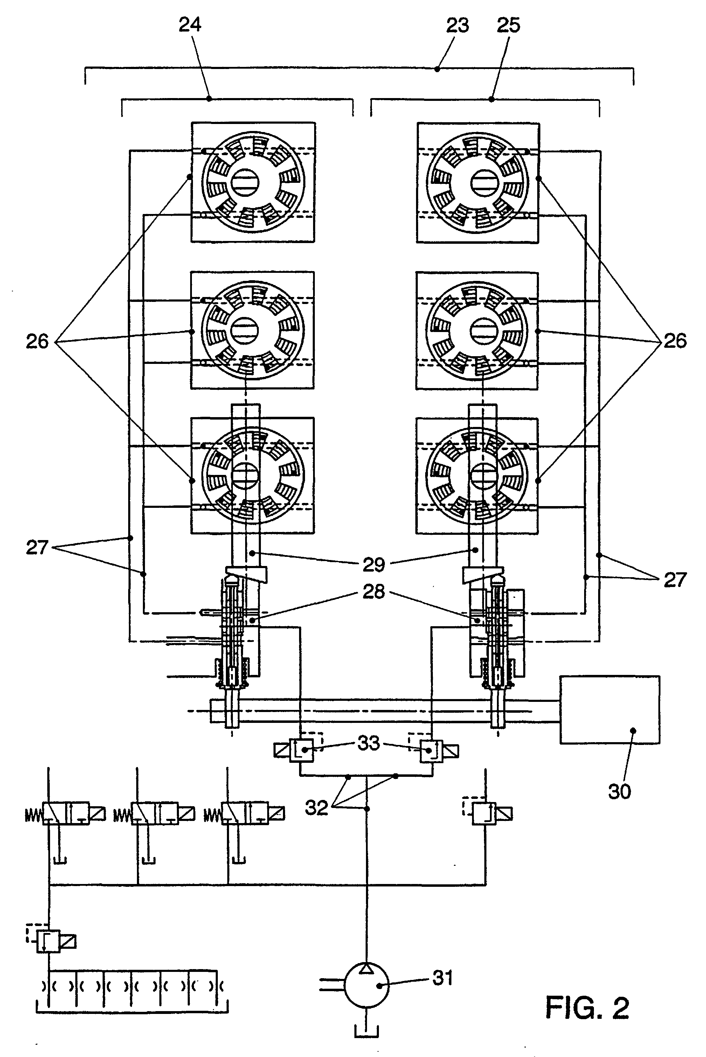

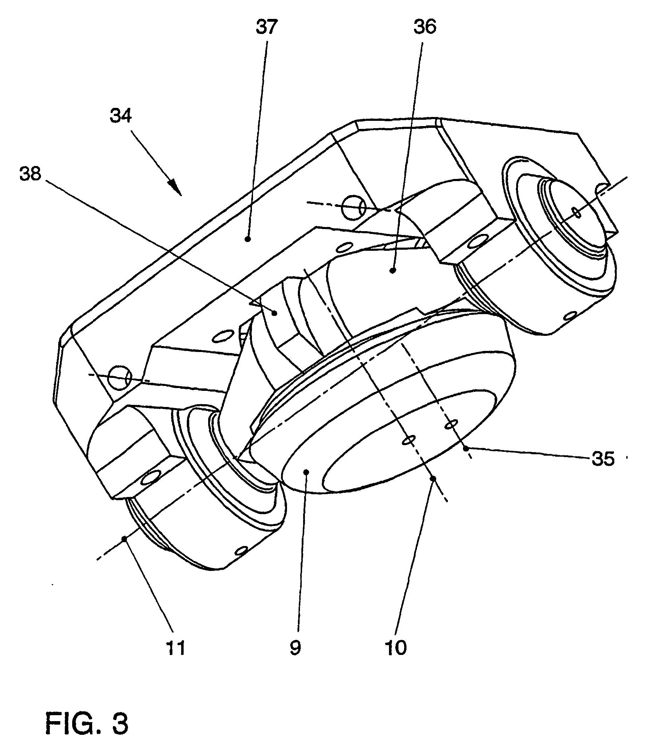

Die Kombination aus Steuerung beider Teilgetriebe auf ein einheitliches Übersetzungsverhältnis, jedoch auf unterschiedliche übertragbare Drehmomente, wird beispielhaft durch Verwendung einer Regeleinrichtung nach Figur 2 in Verbindung mit einer Zwischenrollenlagerung nach Figur 3 erfüllt.

Figur 2 zeigt eine Regeleinrichtung 23, die als Hydrauliksystem ausgebildet ist, und die aus zwei Zweigen 24, 25 besteht, dem ersten Zweig 24 und dem zweiten Zweig 25. Jedem der Zweige 24, 25 ist ein Teilgetriebe 3, 5 nach Figur 1 zugeordnet: der erste Zweig 24 dem ersten Teilgetriebe 3, der zweite Zweig 25 dem zweiten Teilgetriebe 5.

Bei einem Getriebe mit vier Ausgangswellen wären entsprechend vier solcher Zweige 24, 25 erforderlich. Jeder der Zweige 24, 25 weist mehrere Kraftstellelemente 26 auf, in diesem Beispiel drei pro Zweig 24, 25 bzw. pro Teilgetriebe 3, 5. Die Kraftstellelemente 26 sind in diesem Beispiel als Drehkolbensysteme ausgebildet und entsprechen den Kraftstelleinrichtungen 12, 17 in Figur 1. Die Kraftstellelemente 26 werden über jeweils zwei Steuerleitungen 27 durch Steuerventile 28 angesteuert, wobei ein Steuerventil 28 pro Zweig 24, 25 vorgesehen ist. Die Krafstellelemente 26 sind jeweils für jeden der Zweige 24, 25 über die zugeordneten Steuerleitungen 27 parallel geschaltet. Auf jedes der Steuerventile 28 wirkt jeweils ein Positionsgeber 29 eines einzigen Kraftstellelementes 26 des betreffenden Zweiges 24, 25 und ein gemeinsamer Sollwertgeber 30 ein. Eine Pumpe 31 steht über Versorgungsleitungen 32 mit zwischengeschalteten Druckreglern 33 mit den Steuerventilen 28 in Verbindung.

Die Regeleinrichtung 23 funktioniert derart, daß die Pumpe 31 die Steuerventile 28 über die Versorgungsleitungen 32 mit Drucköl versorgt. Dabei wird ein einheitlicher Systemdruck in beiden Zweigen 24, 25 jeweils durch einen der Druckregler 33 eingestellt. Durch den Systemdruck wird das maximale übertragbare Drehmoment und auch das Regelverhalten der Regeleinrichtung 23 festgelegt. Die Steuerventile 28 haben die Aufgabe, die Kraftstellelemente 26 des jeweils zugeordneten Zweiges 24, 25 durch entsprechende Steuerung des Druckes in den Steuerleitungen 27 derart anzusteuern, daß eine Differenz, die sich aus der Information des jeweiligen Positionsgebers 29 und der Vorgabe des Sollwertgebers 30 ergibt, zu Null wird. Da sich sowohl die Positionsgeber 29 als auch der Sollwertgeber 30 auf das Übersetzungsverhältnis beziehen, bedeutet dies, daß einerseits das Übersetzungsverhältnis des jeweils zugeordneten Teilgetriebes 3, 5 auf einem gemeinsamen, durch den Sollwertgeber 30 vorgegebenen, Sollwert gehalten wird, und daß andererseits gerade so viel Druck auf die Zwischenrollen 9, 16 bzw. deren Lagerungen gebracht wird, wie zur Abstützung des momentan übertragenen Drehmomentes in jedem Teilgetriebe 3, 5 erforderlich ist. Bei Traktionsverlust an einer angetriebenen Achse wird also das übertragbare Drehmoment durch eine Reduzierung der auf die Zwischenrollen 9, 16 der zugeordneten Teilgetriebe 3, 5 wirkenden Stützkräfte dem tatsächlich an der jeweils zugeordneten Ausgangswelle 4, 6 abgenommenen Drehmoment angepaßt. Dadurch steht der jeweils anderen angetriebenen Achse mehr Drehmoment zur Verfügung, was einer optimalen traktionsabhängigen Verteilung des gesamten zur Verfügung stehenden Drehmomentes entspricht.

Eine solche Kopplung der Regelung des Übersetzungsverhältnisses mit der Regelung des übertragbaren Drehmomentes wird z.B. durch eine Zwischenrollenlagerung nach Figur 3 ermöglicht.

Die Figur 3 zeigt eine Zwischenrollenlagerung 34 in der beispielhaft eine der ersten Zwischenrollen 9, die frei drehbar um ihre Rotationsachse 10 gelagert und drehbar um eine exzentrisch und parallel zur Rotationsachse 10 angeordnete Lagerachse 35 an einem Brückenträger 36 befestigt ist. Durch die exzentrische Lagerung werden elastische Verformungen und Fertigungstoleranzen ausgeglichen, so daß die Zwischenrollen 9 jeweils von der ersten Antriebsscheibe 7 und der ersten Abtriebsscheibe 8 gleich große Kräfte erfahren. Der Brückenträger 36 ist in einem Gehäuse 37 schwenkbar um die Kippachse 11 und in Richtung der Kippachse 11 axial verschiebbar gelagert. Der Brückenträger 36 weist einen Laststeg 38 auf, über den durch das im Gehäuse 37 untergebrachte Kraftstellelement 26 gemäß Figur 2 mittels einer Exzenterführung eine axiale Stellkraft einleitbar ist.

Ausgehend von einer vorgegebenen Position der ersten Zwischenrolle 9 bezüglich der Kippachse 11 und einer bestimmten Stützkraft auf diese Zwischenrolle 9 sorgt ein durch eine Änderung des momentan übertragenen Drehmomentes hervorgerufenes Ungleichgewicht für eine axiale Auslenkung des Brückenträgers 36. Da die Rotationsachse 10 der Zwischenrolle 9 die Drehachse der ersten Antriebs- und Abtriebsscheibe 7, 8 nicht mehr schneidet, werden an den Kontaktflächen entgegengesetzte Querkräfte auf die Zwischenrolle 9 wirksam, die zu einer Drehung der Zwischenrolle 9 um die Kippachse 11 führen. Diese Drehung wird von der Regeleinrichtung 23 registriert und durch eine Anpassung der auf die Zwischenrolle 9 wirksamen Stützkraft kompensiert, d.h. eine ungewollte Veränderung des Übersetzungsverhältnisses im Ergebnis verhindert. Durch die Regelung des Übersetzungsverhältnisses wird das übertragbare Drehmoment durch Anpassung der Stützkräfte an das momentan übertragene Drehmoment angepaßt.

Die Lagerung der zweiten Zwischenrollen 16 in dem zweiten Teilgetriebe 5 entspricht der Zwischenrollenlagerung 34 der ersten Zwischenrollen 9 in dem ersten Teilgetriebe 3 nach Figur 3.

### BEZUGSZEICHENLISTE

- 1: Getriebe
- 2: Eingangswelle
- 3: erstes Teilgetriebe
- 4: erste Ausgangswelle
- 5: zweites Teilgetriebe
- 6: zweite Ausgangswelle
- 7: erste Antriebsscheibe
- 8: erste Abtriebsscheibe
- 9: erste Zwischenrolle
- 10: Rotationsachse
- 11: Kippachse
- 12: erste Kraftstelleinrichtung
- 13: zweite Antriebsscheibe
- 14: zweite Abtriebsscheibe
- 15: Axiallager
- 16: zweite Zwischenrolle
- 17: zweite Kraftstelleinrichtung
- 18: gehäusefeste Achse
- 19: Getriebegehäuse
- 20: Spannvorrichtung
- 21: Schaltgetriebe
- 22: Anfahrelement
- 23: Regeleinrichtung
- 24: erster Zweig
- 25: zweiter Zweig
- 26: Krafstellelement
- 27: Steuerleitung
- 28: Steuerventil
- 29: Positionsgeber
- 30: Sollwertgeber
- 31: Pumpe
- 32: Versorgungsleitung
- 33: Druckregler
- 34: Zwischenrollenlagerung
- 35: Lagerachse
- 36: Brückenträger
- 37: Gehäuse
- 38: Laststeg

## Patentansprüche

1. Getriebe mit stufenlos variablem Übersetzungsverhältnis, insbesondere für Kraftfahrzeuge, mit einer Eingangswelle (2), mit mehreren mit der Eingangswelle (2) in Verbindung stehenden und in Toroidbauweise ausgebildeten Teilgetrieben (3,5), und mit mehreren Ausgangswellen (4,6), wobei jede Ausgangswelle (4,6) jeweils mit einem der Teilgetriebe (3,5) verbunden ist und die Ausgangswellen (4,6) unabhängig voneinander betreibbar ausgebildet und angeordnet sind, wobei die Teilgetriebe (3,5) jeweils eine Antriebsscheibe (7,13) und eine Abtriebsscheibe (8,14) sowie jeweils mehrere Zwischenrollen (9,16) und jeweils eine Zwischenrollenlagerung (34) aufweisen und mindestens eine auf die Teilgetriebe (3,5) wirkende Regeleinrichtung (23) vorgesehen ist, wobei die Antriebsscheiben (7,13) und die Abtriebsscheiben (8,14) derart paarweise spiegelsymmetrisch angeordnet sind, daß sich zwischen den Antriebs- (7,13) und Abtriebsscheiben (8,14) wirksame axiale Anpreßkräfte gegeneinander aufheben, **dadurch gekennzeichnet, daß** für alle Teilgetriebe (3,5) eine gemeinsame Spannvorrichtung (20) zur Erzeugung und Veränderung der axialen Anpreßkräfte vorgesehen ist, daß die Regeleinrichtung (23) derart ausgebildet und angeordnet ist, daß ein an der Eingangswelle (2) anliegendes Drehmoment traktionsabhängig auf die Ausgangswellen (4,6) verteilbar ist, wobei jede Zwischenrollenlagerung (34) derart ausgebildet und angeordnet ist, daß jeweils das Übersetzungsverhältnis und die Stützkräfte zur Abstützung des übertragenen Drehmomentes jedes Teilgetriebes (3,5) durch eine Kraftstelleinrichtung (12,17) einstellbar und veränderbar ist, wobei für jedes Teilgetriebe (3,5) eine Kopplung zwischen einem übertragenen Drehmoment und einem eingestellten Übersetzungsverhältnis derart realisiert ist, daß eine Änderung des übertragenen Drehmomentes eine Veränderung des Übersetzungsverhältnisses bewirkt, wobei die Veränderung des Übersetzungsverhältnisses mit Hilfe der Regeleinrichtung (23) registrierbar und dadurch kompensierbar ist, daß die auf die Zwischenrollenlagerungen (34) einwirkenden Stützkräfte dem geänderten Drehmoment anpassbar sind.

2. Getriebe nach Anspruch 1, **dadurch gekennzeichnet, daß** die Spannvorrichtung (20) als hydraulische Vorrichtung ausgebildet ist.

3. Getriebe nach Anspruch 2, **dadurch gekennzeichnet, daß** die Spannvorrichtung (20) mehrere parallel geschaltete Druckzweige aufweist.

4. Getriebe nach einem der Ansprüche 1 bis 3, **dadurch gekennzeichnet, daß** jedes der Teilgetriebe (3, 5) jeweils mindestens eine Kraftstelleinrichtung (12, 17) zur Erzeugung und Veränderung von Stellkräften aufweist, und daß die Stallkräfte als Stützkräfte zur Abstützung eines übertragenen Drehmomentes und zur Einstellung und Änderung eines Übersetzungsverhältnisses vorgesehen sind.

5. Getriebe nach Anspruch 4, **dadurch gekennzeichnet, daß** den Zwischenrollen (9, 16) jeweils eine gemeinsame Kraftstelleinrichtung (12, 17) oder jeder der Zwischenrollen (9, 16) eine separate Kraftstelleinrichtung (12, 17) zugeordnet ist.

6. Getriebe nach Anspruch 5, **dadurch gekennzeichnet, daß** die Zwischenrollen (9, 16) bezüglich zugeordneter Rotationsachsen (10) exzentrisch gelagert sind.

7. Getriebe nach einem der Ansprüche 5 oder 6, **dadurch gekennzeichnet, daß** die einem Teilgetriebe (3, 5) zugeordneten Zwischenrollen (9, 16) in einem gemeinsamen Gehäuse (37) angeordnet sind.

8. Getriebe nach Anspruch 7, **dadurch gekennzeichnet, daß** jeder der Zwischenrollen (9, 16) ein Brückenträger (36) zugeordnet ist, der in dem Gehäuse (37) bezüglich einer Kippachse (11) schwenkbar und axial verschiebbar gelagert ist, und daß jeder der Brückenträger (36) einen Laststeg (38) zur Einleitung einer axialen Stellkraft aufweist.

9. Getriebe nach einem der Ansprüche 1 bis 8, **dadurch gekennzeichnet, daß** die Regeleinrichtung (23) für jedes der Teilgetriebe (3, 5) mindestens eine Rückführung des Übersetzungsverhältnisses aufweist.

10. Getriebe nach einem der Ansprüche 4 bis 8, **dadurch gekennzeichnet, daß** die Regeleinrichtung (23) derart ausgebildet und angeordnet ist, daß durch eine Änderung der Stellkräfte der Kraftstelleinrichtungen (12, 17) das Übersetzungsverhältnis in jedem der Teilgetriebe (3, 5) auf einen einheitlichen vorgegebenen Sollwert einstellbar ist.

11. Getriebe nach Anspruch 9 oder 10, **dadurch gekennzeichnet, daß** die Regeleinrichtung (23) als Hydrauliksystem ausgebildet ist, daß der Regeleinrichtung (23) mindestens eine Pumpe (31) und mindestens ein Druckregler (33) zugeordnet sind, daß die Regeleinrichtung (23) einen für alle Teilgetriebe (3, 5) gemeinsamen Sollwertgeber (30) für das Übersetzungsverhältnis aufweist, daß für jedes der Teilgetriebe (3, 5) ein separates Steuerventil (28) vorgesehen ist, das mit dem Sollwertgeber (30) in Verbindung steht, daß die Regeleinrichtung (23) für jedes der Teilgetriebe (3, 5) eine unabhängige Rückführung der Zwischenrollenposition bezüglich ihrer Neigung um die Kippachse (11) aufweist, wobei die Rückführung auf das zugeordnete Steuerventil (28) einwirkt, und daß die mit den Zwischenrollenlagerungen (34) in Verbindung stehenden Kraftstelleinrichtungen (12, 17) von dem Steuerventil (28) des zugeordneten Teilgetriebes (3, 5) steuerbar sind.

12. Getriebe nach Anspruch 11, **dadurch gekennzeichnet, daß** die jeweils jedem der Teilgetriebe (3, 5) zugeordneten Kraftstelleinrichtungen (12, 17) parallel geschältet sind.

13. Getriebe nach Anspruch 11 oder 12, **dadurch gekennzeichnet, daß** die Kraftstelleinrichtungen (12, 17) jeweils ein Drehkolbensystem aufweisen, das derart ausgebildet und angeordnet ist, daß eine rotatorische Bewegung über eine Exzenterführung in eine translatorische Bewegung wandelbar ist.

14. Getriebe nach einem der Ansprüche 1 bis 13, **dadurch gekennzeichnet, daß** ein Schaltgetriebe (21) zur Drehrichtungsumkehr vorgesehen ist, und daß das Schaltgetriebe (21) dem Getriebe (1) eingangsseitig vorgeschaltet und mit der Eingangswelle (2) des Getriebes (1) verbunden ist.

15. Getriebe nach einem der Ansprüche 1 bis 14, **dadurch gekennzeichnet, daß** ein Anfahrelement (22), insbesondere eine Reibkupplung oder eine hydraulische Kupplung, vorgesehen ist, daß das Anfahrelement (22) dem Getriebe (1) eingangsseitig vorgeschaltet ist, und daß das Anfahrelement (22) mit der Eingangswelle (2) des Getriebes (1) oder mit dem diesem vorgeschalteten Schaltgetriebe (21) in Wirkverbindung steht.

16. Getriebe nach Anspruch 11, **dadurch gekennzeichnet, daß** die Stützkräfte von der Regeleinrichtung (23), auf die ein für alle der Teilgetriebe (3, 5) gemeinsamer Sollwert und ein jeweiliger Istwert des Übersetzungsverhältnisses einwirken steuerbar sind, und daß bei einem Ungleichgewicht zwischen dem übertragenen Drehmoment und den Stützkräften in einem der Teilgetriebe (3, 5) dort vorhandene Zwischenrollen (9, 16) bezogen auf zugeordnete Kippachsen (11) axial verschiebbar sind, so daß auf die Zwischenrollen (9, 16) von Antriebs- (7, 13) und Abtriebsscheiben (8, 14) herrührende Querkräfte bezüglich der Kippachsen (11) einwirken und die Zwischenrollen (9, 16) um die Kippachsen (11) drehbar sind.

## Claims

1. Transmission with a continuously variable transmission ratio, in particular for motor vehicles, with an input shaft (2), with a plurality of sub-transmissions (3, 5) connected to the input shaft (2) and designed in the toroidal form of construction, and with a plurality of output shafts (4, 6), each output shaft (4, 6) being connected in each case to one of the sub-transmissions (3, 5), and the output shafts (4, 6) being designed and arranged so as to be capable of being operated independently of one another, the sub-transmissions (3, 5) in each case having a driving disc (7, 13) and a driven disc (8, 14) and also in each case a plurality of intermediate rollers (9, 16) and in each case an intermediate-roller mounting (34), and at least one regulating device (23) acting on the sub-transmissions (3, 5) being provided, the driving discs (7, 13) and the driven discs (8, 14) being arranged mirror-symmetrically in pairs, in such a way that axial pressure forces active between the driving discs (7, 13) and driven discs (8, 14) merge one another, **characterized in that** a common tension device (20) for generating and varying the axial pressure forces is provided for all the sub-transmissions (3, 5), **in that** the regulating device (23) is designed and arranged in such a way that a torque applied to the input shaft (2) is capable of being distributed to the output shafts (4, 6) as a function of traction, each intermediate-roller mounting (34) being designed and arranged in such a way that in each case the transmission ratio and the supporting forces for supporting the transmitted torque of each sub-transmission (3, 5) can be set and varied by means of a force-setting device (12, 17), a coupling between a transmitted torque and a set transmission ratio being implemented for each sub-transmission (3, 5) in such a way that a change in the transmitted torque brings about a variation in the transmission ratio, the variation in the transmission ratio being capable of being recorded with the aid of the regulating device (23) and of being compensated **in that** the supporting forces acting on the intermediate-roller mountings (34) can be adapted to the changed torque.

2. Transmission according to Claim 1, **characterized in that** the tension device (20) is designed as a hydraulic device.

3. Transmission according to Claim 2, **characterized in that** the tension device (20) has a plurality of parallel-connected pressure branches.

4. Transmission according to one of Claims 1 to 3, **characterized in that** each of the sub-transmissions (3, 5) has in each case at least one force-setting device (12, 17) for generating and varying actuating forces, and **in that** the actuating forces are provided as supporting forces for supporting a transmitted torque and for setting and changing a transmission ratio.

5. Transmission according to Claim 4, **characterized in that** the intermediate rollers (9, 16) are in each case assigned a common force-setting device (12, 17) or each of the intermediate rollers (9, 16) is assigned a separate force-setting device (12, 17).

6. Transmission according to Claim 5, **characterized in that** the intermediate rollers (9, 16) are mounted eccentrically with respect to associated axes of rotation (10).

7. Transmission according to one of Claims 5 and 6, **characterized in that** the intermediate rollers (9, 16) assigned to a sub-transmission (3, 5) are arranged in a common housing (37).

8. Transmission according to Claim 7, **characterized in that** each of the intermediate rollers (9, 16) is assigned a bridge carrier (36) which is mounted in the housing (37) pivotably and axially displaceably with respect to a tilting axis (11), and **in that** each of the bridge carriers (36) has a load web (38) for introducing an axial actuating force.

9. Transmission according to one of Claims 1 to 8, **characterized in that** the regulating device (23) has at least one transmission ratio feedback for each of the sub-transmissions (3, 5).

10. Transmission according to one of Claims 4 to 8, **characterized in that** the regulating device (23) is designed and arranged in such a way that, by a change in the actuating forces of the force-setting devices (12, 17), the transmission ratio in each of the sub-transmissions (3, 5) can be set to a uniform predetermined desired value.

11. Transmission according to Claim 9 or 10, **characterized in that** the regulating device (23) is designed as a hydraulic system, **in that** the regulating device (23) is assigned at least one pump (31) and at least one pressure regulator (33), **in that** the regulating device (23) has for the transmission ratio a desired-value transmitter (30) common to all the sub-transmissions (3, 5), **in that** for each of the sub-transmissions (3, 5), a separate control valve (28) is provided, which is connected to the desired-value transmitter (30), **in that** the regulating device (23) has for each of the sub-transmissions (3, 5) an independent feedback of the intermediate-roller position with respect to its inclination about the tilting axis (11), the feedback acting on the associated control valve (28), and **in that** the force-setting devices (12, 17) connected to the intermediate-roller mountings (34) are capable of being controlled by the control valve (28) of the associated sub-transmission (3, 5).

12. Transmission according to Claim 11, **characterized in that** the force-setting devices (12, 17) assigned in each case to each of the sub-transmissions (3, 5) are parallel-connected.

13. Transmission according to Claim 11 or 12, **characterized in that** the force-setting devices (12, 17) each have a rotary-piston system which is designed and arranged in such a way that a rotational movement can be converted into a translational movement via an eccentric guide.

14. Transmission according to one of Claims 1 to 13, **characterized in that** a shift transmission (21) is provided for the reversal of direction of rotation, and **in that** the shift transmission (21) precedes the transmission (1) on the input side and is connected to the input shaft (2) of the transmission (1).

15. Transmission according to one of Claims 1 to 14, **characterized in that** a starting element (22), in particular a friction clutch or a hydraulic clutch, is provided, **in that** the starting element (22) precedes the transmission (1) on the input side, and **in that** the starting element (22) is operatively connected to the input shaft (2) of the transmission (1) or to the shift transmission (21) preceding the latter.

16. Transmission according to Claim 11, **characterized in that** the regulating device (23), on which a desired value common to all the sub-transmissions (3, 5) and a respective actual value of the transmission ratio acts, regulates the supporting forces and **in that**, in the event of an unbalance between the transmitted torque and the supporting forces in one of the sub-transmissions (3, 5), intermediate rollers (9, 16) present there can be displaced axially with respect to associated tilting axes (11) so that transverse forces originating from driving discs (7, 13) and driven discs (8, 14), with respect to the tilting axes (11), act on the intermediate rollers (9, 16), and the intermediate rollers (9, 16) can be rotated about the tilting axes (11).

## Revendications

1. Transmission à rapport de transmission variable en continu, en particulier pour véhicules automobiles, comprenant un arbre d'entrée (2), plusieurs transmissions partielles (3, 5) de construction toroïdale connectées à l'arbre d'entrée (2) et plusieurs arbres de sortie (4, 6), chaque arbre de sortie (4, 6) étant connecté à chaque fois à l'une des transmissions partielles (3, 5) et les arbres de sortie (4, 6) étant réalisés et disposés de manière à pouvoir être actionnés indépendamment l'un de l'autre, les transmissions partielles (3, 5) présentant chacune un disque d'entraînement (7, 13) et un disque de sortie (8, 14) ainsi que plusieurs rouleaux intermédiaires (9, 16) et à chaque fois un palier à rouleaux intermédiaires (34), et au moins un dispositif de contrôle (23) agissant sur les transmissions partielles (3, 5) étant prévu, les disques d'entraînement (7, 13) et les disques de sortie (8, 14) étant disposés par paire avec une symétrie spéculaire de telle sorte que des forces de pression axiales agissant entre les disques d'entraînement (7, 13) et les disques de sortie (8, 14) s'annulent mutuellement, **caractérisée en ce que** pour toutes les transmissions partielles (3, 5), il est prévu un dispositif de tensionnement commun (20) pour générer et faire varier les forces de pression axiales, **en ce que** le dispositif de contrôle (23) est réalisé et disposé de telle sorte qu'un couple s'appliquant à l'arbre d'entrée (2) puisse être réparti en fonction de la traction sur les arbres de sortie (4, 6), chaque palier à rouleaux intermédiaires (34) étant réalisé et disposé de telle sorte qu'à chaque fois le rapport de transmission et les forces de support pour supporter le couple transmis de chaque transmission partielle (3, 5) puissent être ajustés et modifiés par un dispositif de réglage de force (12, 17), un accouplement entre un couple transmis et un rapport de transmission ajusté étant réalisé pour chaque transmission partielle (3, 5) de telle sorte qu'une modification du couple transmis provoque une variation du rapport de transmission, la variation du rapport de transmission pouvant être enregistrée à l'aide du dispositif de contrôle (23) et compensée par le fait que les forces de support agissant sur les paliers à rouleaux intermédiaires (34) peuvent être adaptées au couple modifié.

2. Transmission selon la revendication 1, **caractérisée en ce que** le dispositif de tensionnement (20) est réalisé en tant que dispositif hydraulique.

3. Transmission selon la revendication 2, **caractérisée en ce que** le dispositif de tensionnement (20) présente plusieurs branches de pression montées en parallèle.

4. Transmission selon l'une quelconque des revendications 1 à 3, **caractérisée en ce que** chacune des transmissions partielles (3, 5) présente à chaque fois au moins un dispositif de réglage de force (12, 17) destiné à générer et faire varier des forces de réglage, et **en ce que** les forces de réglage sont prévues en tant que forces de support pour supporter un couple transmis et pour ajuster et faire varier un rapport de transmission.

5. Transmission selon la revendication 4, **caractérisée en ce qu'**à chaque fois un dispositif de réglage de force commun (12, 17) est associé aux rouleaux intermédiaires (9, 16), ou un dispositif de réglage de force séparé (12, 17) est associé à chacun des rouleaux intermédiaires (9, 16).

6. Transmission selon la revendication 5, **caractérisée en ce que** les rouleaux intermédiaires (9, 16) sont montés de manière excentrique par rapport aux axes de rotation associés (10).

7. Transmission selon l'une quelconque des revendications 5 ou 6, **caractérisée en ce que** les rouleaux intermédiaires (9, 16) associés à une transmission partielle (3, 5) sont disposés dans un boîtier commun (37).

8. Transmission selon la revendication 7, **caractérisée en ce qu'**à chacun des rouleaux intermédiaires (9, 16) est associé un support de pont (36) qui est monté dans le boîtier (37) de manière à pouvoir pivoter et à se déplacer axialement par rapport à un axe de basculement (11), et **en ce que** chacun des supports de pont (36) présente une nervure de charge (38) pour introduire une force de réglage axiale.

9. Transmission selon l'une quelconque des revendications 1 à 8, **caractérisée en ce que** le dispositif de contrôle (23) pour chacune des transmissions partielles (3, 5) présente au moins une remise à zéro du rapport de transmission.

10. Transmission selon l'une quelconque des revendications 4 à 8, **caractérisée en ce que** le dispositif de contrôle (23) est réalisé et disposé de telle sorte que l'on puisse ajuster, par une variation des forces de réglage des dispositifs de réglage de force (12, 17), le rapport de transmission dans chacune des transmissions partielles (3, 5), à une valeur de consigne uniforme prédéfinie.

11. Transmission selon la revendication 9 ou 10, **caractérisée en ce que** le dispositif de contrôle (23) est réalisé en tant que système hydraulique, **en ce qu'**au moins une pompe (31) et au moins un régulateur de pression (33) sont associés au dispositif de contrôle (23), **en ce que** le dispositif de contrôle (23) présente un générateur de valeurs de consigne (30) commun à toutes les transmissions partielles (3, 5) pour le rapport de transmission, **en ce que** pour chacune des transmissions partielles (3, 5), il est prévu une soupape de commande séparée (28) qui est connectée au générateur de valeurs de consigne (30), **en ce que** le dispositif de contrôle (23) présente pour chacune des transmissions partielles (3, 5) une remise à zéro indépendante de la position des rouleaux intermédiaires par rapport à leur inclinaison autour de l'axe de basculement (11), la remise à zéro agissant sur la soupape de commande associée (28), et **en ce que** les dispositifs de réglage de force (12, 17) connectés aux paliers à rouleaux intermédiaires (34) peuvent être commandés par la soupape de commande (28) de la transmission partielle associée (3, 5).

12. Transmission selon la revendication 11, **caractérisée en ce que** les dispositifs de réglage de force (12, 17) associés à chaque fois à chacune des transmissions partielles (3, 5) sont montés en parallèle.

13. Transmission selon la revendication 11 ou 12, **caractérisée en ce que** les dispositifs de réglage de force (12, 17) présentent chacun un système de piston rotatif, qui est réalisé et disposé de telle sorte qu'un mouvement de rotation puisse être converti en un mouvement de translation par le biais d'un guide excentrique.

14. Transmission selon l'une quelconque des revendications 1 à 13, **caractérisée en ce qu'**il est prévu une transmission à changement de vitesse (21) pour inverser le sens de rotation et **en ce que** la transmission à changement de vitesse (21) est montée avant la transmission (1) du côté de l'entrée, et est connectée à l'arbre d'entrée (2) de la transmission (1).

15. Transmission selon l'une quelconque des revendications 1 à 14, **caractérisée en ce qu'**il est prévu un élément de démarrage (22), en particulier un accouplement à friction ou un accouplement hydraulique, **en ce que** l'élément de démarrage (22) est monté avant la transmission (1) du côté de l'entrée, et **en ce que** l'élément de démarrage (22) est en liaison coopérante avec l'arbre d'entrée (2) de la transmission (1) ou avec la transmission à changement de vitesse (21) montée avant celle-ci.

16. Transmission selon la revendication 11, **caractérisée en ce que** les forces de support sont commandées par le dispositif de contrôle (23), sur lequel agissent une valeur de consigne commune pour toutes les transmissions partielles (3, 5) et une valeur réelle respective du rapport de transmission, et **en ce qu'**en cas de déséquilibre entre le couple transmis et les forces de support dans l'une des transmissions partielles (3, 5), les rouleaux intermédiaires s'y trouvant (9, 16) peuvent être déplacés axialement par rapport à des axes de basculement associés (11), de sorte que des forces transversales par rapport aux axes de basculement (11), provenant des disques d'entraînement (7, 13) et des disques de sortie (8, 14), agissent sur les rouleaux intermédiaires (9, 16) et que les rouleaux intermédiaires (9, 16) puissent tourner autour des axes de basculement (11).
